# EUROPEAN PATENT APPLICATION

(11) **EP 4 435 274 A1**
(43) Date of publication of application: **25.09.2024**
(21) Application number: 24165341.9
(22) Date of filing: 21.03.2024
(51) Int. Cl.: F15B 21/08, A01B 63/10

(54) **WORKING MACHINE AND METHOD OF CONTROLLING WORKING MACHINE**

(30) Priority: 23.03.2023 JP 2023046803
(71) Applicant: KUBOTA CORPORATION, Osaka-shi, Osaka 556-8601 (JP)
(72) Inventor: OHARA, Shinji, OSAKA, 5900908 (JP)
(74) Representative: Cabinet Beau de Loménie

(57) **Abstract**

A working machine (1) includes a prime mover (5) to produce power, a variable displacement hydraulic pump (P) to be actuated by power produced by the prime mover (5) to deliver hydraulic fluid, a hydraulic actuator (26) to be actuated by hydraulic fluid delivered by the hydraulic pump (P), a control valve (30) to adjust hydraulic fluid to actuate the hydraulic actuator (26), and a controller (11) configured or programmed to control the control valve (30). The controller (11) is configured or programmed to, based on an actual rotation speed of the prime mover (5), control the control valve (30) to limit a maximum flow rate (MF) of hydraulic fluid supplied from the control valve (30) to the hydraulic actuator (26) such that the maximum flow rate (MF) does not exceed a limit flow rate (LF), and the limit flow rate (LF) corresponding to a rotation speed (R) of the prime mover (5) is equal to or less than a maximum delivery flow rate of the hydraulic pump (P) corresponding to the rotation speed (R).

## Description

### BACKGROUND OF THE INVENTION

### Field of the Invention

The present invention relates to a working machine such as a tractor and a method of controlling a working machine.

### Description of the Related Art

A hydraulic system disclosed in Japanese Unexamined Patent Application Publication No. 2018-135926 (PTL 1) includes a variable displacement pump, a valve unit that includes multiple control valves for multiple hydraulic actuators, and a regulator that adjusts the delivery flow rate of the pump such that the differential pressure between the delivery pressure of the pump and the maximum load pressure of the multiple hydraulic actuators is constant, in which the minimum delivery flow rate of the regulator is mechanically set to a value more than zero.

### SUMMARY OF THE INVENTION

The hydraulic system in PTL 1 uses a load sensing hydraulic system, and the delivery flow rate of the variable displacement pump is adjusted such that the differential pressure between the delivery pressure of the pump and the maximum load pressure of the multiple hydraulic actuators is constant.

However, if the rotation speed of a drive source (prime mover) that drives the pump is not sufficient, the delivery flow rate of the pump may be smaller than the supply flow rate of a hydraulic fluid that can be supplied from the control valves to the hydraulic actuators, and the state in which the hydraulic actuators are controlled substantially based on the rotation speed of the prime mover may occur.

The present invention was made to solve such issues of the existing technique, and it is an object of the present invention to provide a working machine and a method of controlling a working machine each of which makes it possible to appropriately control hydraulic actuator(s) at a pressure equal to or less than the delivery pressure of a hydraulic pump.

A working machine according to an aspect of the present invention includes a prime mover to produce power, a variable displacement hydraulic pump to be actuated by power produced by the prime mover to deliver hydraulic fluid, a hydraulic actuator to be actuated by hydraulic fluid delivered by the hydraulic pump, a control valve to adjust hydraulic fluid to actuate the hydraulic actuator, and a controller configured or programmed to control the control valve, wherein the controller is configured or programmed to, based on an actual rotation speed of the prime mover, control the control valve to limit a maximum flow rate of hydraulic fluid supplied from the control valve to the hydraulic actuator such that the maximum flow rate does not exceed a limit flow rate, and the limit flow rate corresponding to a rotation speed of the prime mover is equal to or less than a maximum delivery flow rate of the hydraulic pump corresponding to the rotation speed.

Each of a plurality of the limit flow rates may be less than a corresponding maximum delivery flow rate that corresponds to a corresponding rotation speed of the prime mover.

Each of the plurality of limit flow rates may be calculated by converting the corresponding maximum delivery flow rate based on a standard flow rate characteristic graph and a maximum flow rate characteristic graph, the standard flow rate characteristic graph representing a relationship between current values of control current outputted to a standard control valve and flow rates of hydraulic fluid from the standard control valve, the standard control valve being a predetermined control valve, the maximum flow rate characteristic graph being a flow rate characteristic graph for a maximum-flow-rate control valve that is higher in a flow rate of hydraulic fluid than the standard flow rate characteristic graph.

Each of the plurality of limit flow rates may be calculated by converting the corresponding maximum delivery flow rate into a flow rate of hydraulic fluid from the standard control valve by obtaining the corresponding maximum delivery flow rate corresponding to the corresponding rotation speed of the prime mover in a delivery flow rate characteristic graph, the delivery flow rate characteristic graph representing a relationship between a plurality of the rotation speeds of the prime mover and a corresponding plurality of the maximum delivery flow rates, and converting the obtained maximum delivery flow rate into the flow rate of hydraulic fluid from the standard control valve by (i) obtaining a result corresponding to the obtained maximum delivery flow rate based on the maximum flow rate characteristic graph and (ii) obtaining the flow rate of hydraulic fluid from the standard control valve corresponding to the obtained result based on the standard flow rate characteristic graph.

Each of the plurality of limit flow rates may be calculated by converting the corresponding maximum delivery flow rate into the flow rate of hydraulic fluid from the standard control valve by obtaining the corresponding maximum delivery flow rate corresponding to the corresponding rotation speed of the prime mover in the delivery flow rate characteristic graph, and converting the obtained maximum delivery flow rate into the flow rate of hydraulic fluid from the standard control valve by (i) obtaining a current value corresponding to the obtained maximum delivery flow rate based on the maximum flow rate characteristic graph and (ii) obtaining, based on the standard flow rate characteristic graph and the obtained current value, the flow rate of hydraulic fluid supplied from the standard control valve upon receipt of the control current having the obtained current value.

The working machine may further include a load sensing system to control the hydraulic pump such that a differential pressure obtained by subtracting a load pressure on the hydraulic actuator from a delivery pressure of the hydraulic pump is constant.

The working machine may further include a drive device including the hydraulic actuator. The drive device may include a driven member to be driven by the hydraulic actuator. The controller may be configured or programmed to calculate a deviation of an actual position of the driven member from a target value, and control the control valve such that a flow rate of hydraulic fluid from the control valve is equal to or less than the maximum flow rate based on a relationship between the deviation and a target flow rate of hydraulic fluid to actuate the hydraulic actuator and on a relationship between the current value of the control current outputted to the predetermined control valve and a flow rate of hydraulic fluid from the predetermined control valve.

The relationship between the current value of the control current outputted to the predetermined control valve and the flow rate of hydraulic fluid from the predetermined control valve may be defined based on the standard flow rate characteristic graph.

The limit flow rate may be calculated based on the maximum delivery flow rate corresponding to the rotation speed of the prime mover.

The limit flow rate may be calculated using a delivery flow rate characteristic graph representing a relationship between a plurality of the rotation speeds of the prime mover and a corresponding plurality of the maximum delivery flow rates. The delivery flow rate characteristic graph may be selected from one or more delivery flow rate characteristic graphs based on a combination of the prime mover and the hydraulic pump.

The working machine may further include a drive device including the hydraulic actuator. The drive device may be a lifting device to raise and lower a working device, the lifting device including a driven member to be driven by driving the hydraulic actuator. The hydraulic actuator may be a lift cylinder. The driven member may be a lift arm to be driven by driving the lift cylinder.

A method of controlling a working machine according to an aspect of the present invention is a method of controlling a working machine including a prime mover to produce power, a variable displacement hydraulic pump to be actuated by power produced by the prime mover to deliver hydraulic fluid, a hydraulic actuator to be actuated by hydraulic fluid delivered by the hydraulic pump, a control valve to adjust hydraulic fluid to actuate the hydraulic actuator, and a controller configured or programmed to control the control valve, the method including causing the controller to, based on an actual rotation speed of the prime mover, control the control valve to limit a maximum flow rate of hydraulic fluid supplied from the control valve to the hydraulic actuator such that the maximum flow rate does not exceed a limit flow rate, wherein the limit flow rate corresponding to a rotation speed of the prime mover is equal to or less than a maximum delivery flow rate of the hydraulic pump corresponding to the rotation speed.

A working machine and a method of controlling a working machine described above make it possible to appropriately control hydraulic actuator(s) at a pressure equal to or less than the delivery pressure of a hydraulic pump.

The above and other elements, features, steps, characteristics and advantages of the present invention will become more apparent from the following detailed description of the preferred embodiments with reference to the attached drawings.

### BRIEF DESCRIPTION OF THE DRAWINGS

A more complete appreciation of preferred embodiments of the present invention and many of the attendant advantages thereof will be readily obtained as the same becomes better understood by reference to the following detailed description when considered in connection with the accompanying drawings described below.
FIG. 1 is a side view of a working machine.
FIG. 2 illustrates a control system of a working machine.
FIG. 3 is a rear-left perspective view of a lifting device.
FIG. 4 is a left side view illustrating raising/lowering operation of a lifting device.
FIG. 5 illustrates an example of a first graph.
FIG. 6 illustrates an example of a second graph.
FIG. 7 is a first chart illustrating an example of a supply flow rate limit graph and a delivery flow rate characteristic graph.
FIG. 8 is a second chart illustrating an example of a supply flow rate limit graph and a delivery flow rate characteristic graph.
FIG. 9 is a first graph illustrating a standard flow rate characteristic graph and a maximum flow rate characteristic graph.
FIG. 10 is a second chart illustrating a standard flow rate characteristic graph and a maximum flow rate characteristic graph.
FIG. 11 illustrates an example of a corrected second graph.
FIG. 12 illustrates the flow of steps by which a controller limits the maximum flow rate.
FIG. 13 illustrates an example of a supply flow rate limit graph according to a variation and a delivery flow rate characteristic graph.

### DESCRIPTION OF THE PREFERRED EMBODIMENTS

The preferred embodiments will now be described with reference to the accompanying drawings, wherein like reference numerals designate corresponding or identical elements throughout the various drawings. The drawings are to be viewed in an orientation in which the reference numerals are viewed correctly.

Embodiments of the present invention will hereinafter be described with reference to the drawings.

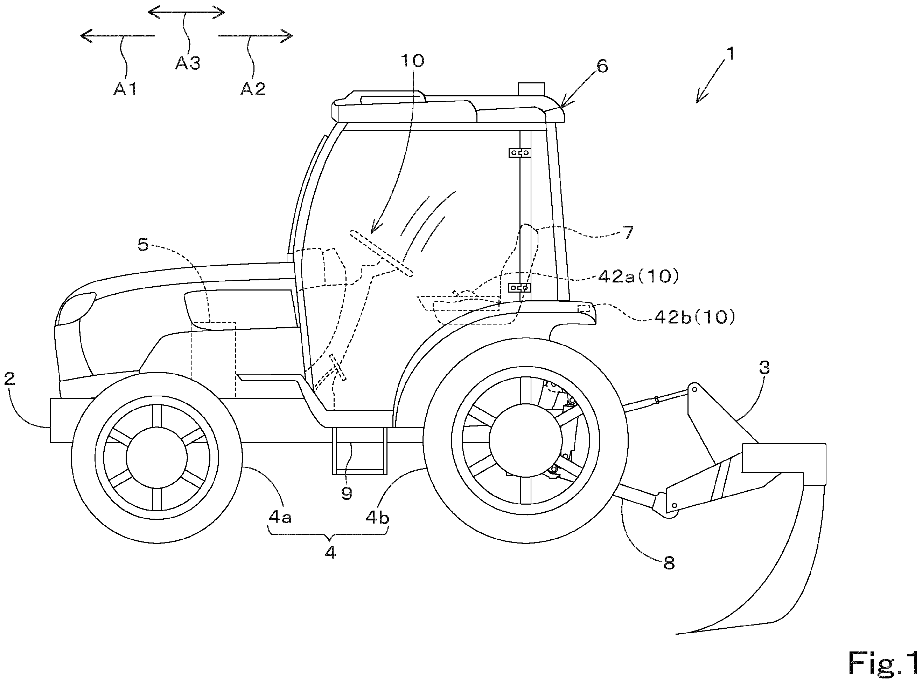

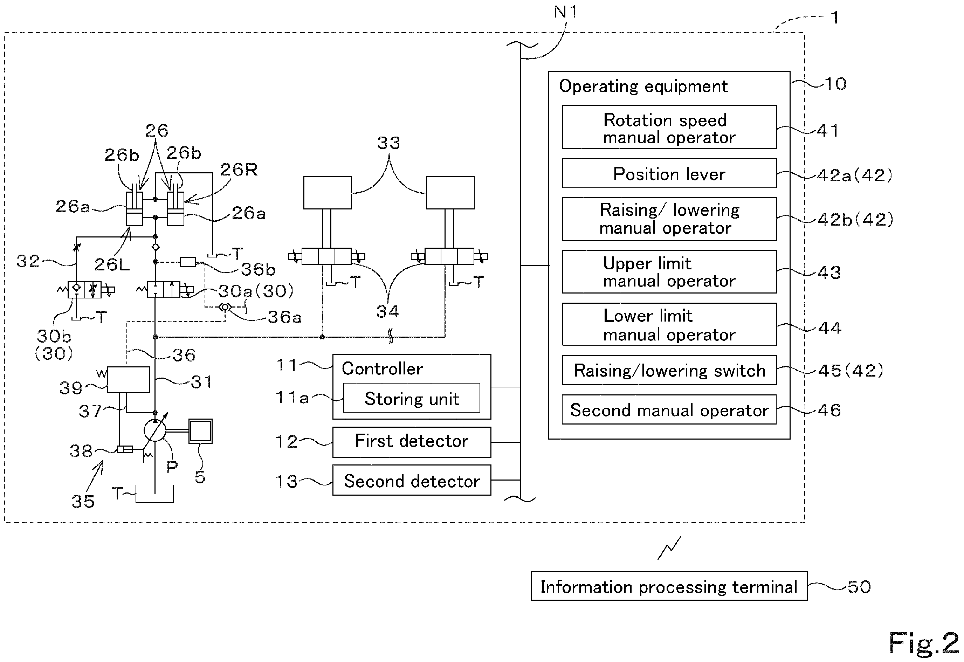

A working machine 1 will now be described with reference to FIGS. 1 and 2. FIG. 1 is a side view of the working machine 1 according to the present embodiment. FIG. 2 illustrates a control system that is included in the working machine 1. As illustrated in FIG. 1, the working machine 1 includes a machine body 2, a working device 3, a traveling device 4, a prime mover 5, a protection structure 6, and a lifting device (drive device) 8.

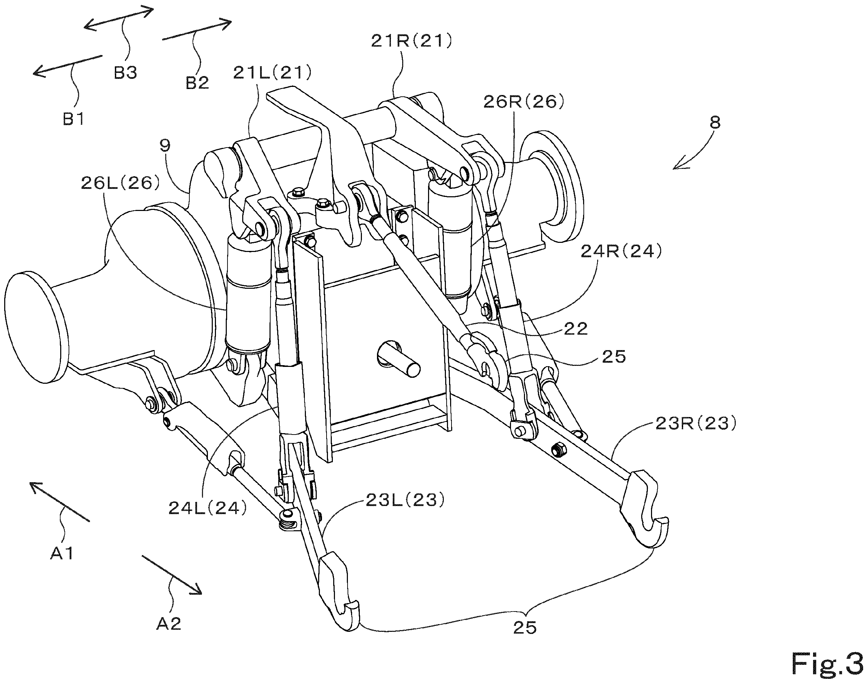

According to one or more embodiments of the present invention, the direction (the direction of arrow A1 in FIG. 1) in which a driver who sits on an operator's seat 7 of the working machine 1 faces is referred to as a forward direction, and the direction (the direction of arrow A2 in FIG. 1) opposite to the forward direction is referred to as a rearward direction. The rightward direction (the direction of arrow B2 in FIG. 3) from the driver is referred to as a rightward direction, and the leftward direction (the direction of arrow B1 in FIG. 3) from the driver is referred to as a leftward direction. A horizontal direction (the direction of arrow B3 in FIG. 3) perpendicular to the front-rear direction (the direction of arrow A3 in FIG. 1) of the working machine 1 is referred to as a vehicle body width direction (or a width direction).

The working device 3 is, for example, an implement, is coupled to a rear portion of the machine body 2, and can carry out various kinds of work. The type of working device 3 is not particularly limited, and examples thereof include a digger that digs potatoes or carrots, spreaders such as a fertilizer spreader (fertilizer applicator) that spreads fertilizer and an agricultural chemical spreader that spreads agricultural chemicals, a seeder that sows seeds in an agricultural field, a harvester for harvest, a mower for mowing, for example, grass, a tedder for tedding, for example, grass, a rake for raking, for example, grass, a baler for baling, for example, grass, and a ground implement to perform work on an agricultural field. Note that FIG. 1 illustrates an example in which a subsoiler as the working device 3 is connected to the rear portion of the machine body 2.

The traveling device 4 applies propelling force to the machine body 2. In the example illustrated in FIG. 1, the traveling device 4 is a wheeled device that includes at least one front wheel 4a and at least one rear wheel 4b but may be a crawler device.

The lifting device 8 can couple the working device 3 to the machine body 2 and can raise and lower the working device 3 with respect to the machine body 2. The lifting device 8 is provided at the rear portion of the machine body 2. For example, the lifting device 8 includes a three-point linkage and/or the like. The working device 3 is attachable to and detachable from the lifting device 8. The working device 3 is coupled to the lifting device 8, and therefore the machine body 2 can move the working device 3.

The prime mover 5 produces power. Examples of the prime mover 5 include a diesel engine and an electric motor. In the present embodiment, the prime mover 5 includes a diesel engine. A flywheel housing is provided at a rear portion of the prime mover 5. Power that is outputted by the prime mover 5 is transmitted to a transmission case 9 located at a lower portion of the machine body 2.

As illustrated in FIG. 1, the working machine 1 includes operating equipment 10 and the operator's seat 7 that is provided at an upper portion of the machine body 2. The operator's seat 7 is provided inside the protection structure (such as a cabin or a canopy) 6. The operating equipment 10 is provided in the vicinity of, for example, the operator's seat 7, and includes a collection of device(s), member(s), and so on related to operations, performed by a operator who sits on the operator's seat 7, of machine(s), device(s), equipment, and member(s) (such as the working device 3, the traveling device 4, and the prime mover 5) included in the working machine 1. The operating equipment 10 includes steering that at least includes, for example, a steering wheel.

As illustrated in FIG. 2, devices included in the working machine 1 are connected together via an in-vehicle network N1 such as CAN, ISOBUS, LIN, or FlexRay. Examples of the devices connected to the in-vehicle network N1 include the prime mover 5, the operating equipment 10, and a controller 11.

The controller 11 includes ECU(s) (electronic controller(s)) and includes CPU(s), volatile memory(memories), nonvolatile memory(memories), other electronic component(s), electric circuit(s), and/or the like. The nonvolatile memory of the controller 11 stores software program(s) and various data for the CPU(s) to control components. That is, the controller 11 controls the working machine 1.

The controller 11 performs various kinds of control relating to the working machine 1. For example, the controller 11 operates the working device 3, the traveling device 4, the prime mover 5, and so on, based on signals (operation signals) inputted from the operating equipment 10. For example, the controller 11 is connected to a first detector 12 to detect the actual rotation speed of the prime mover 5 and controls the rotation speed R of the prime mover 5 based on the actual rotation speed of the prime mover 5 detected by the first detector 12 and an operation signal from a rotation speed manual operator (such as an accelerator pedal and/or an accelerator lever) 41 which is a portion of the operating equipment 10. The first detector 12 outputs a signal (rotation speed signal) indicating the detected rotation speed to the controller 11.

As illustrated in FIG. 2, the controller 11 includes a storing unit (storage and/or memory) 11a. The storing unit 11a is a storing device that stores various information, such as a nonvolatile memory. For example, the storing unit 11a stores various kinds of application software. The storing unit 11a may be a storing device such as a hard disk drive (HDD) or a solid-state drive (SSD) that is provided outside the controller 11 and that is connected to the in-vehicle network N1.

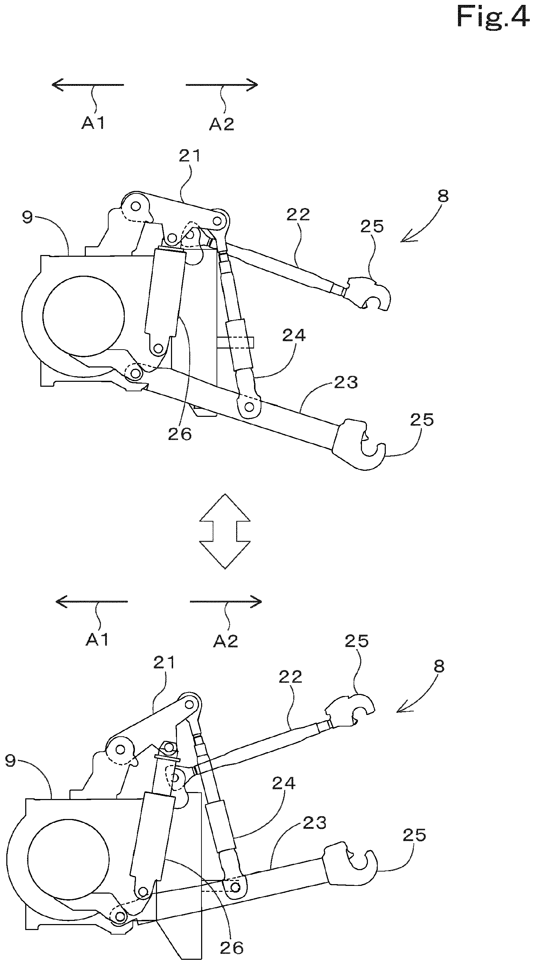

The lifting device 8 will now be described in detail. As illustrated in FIGS. 3 and 4, the lifting device 8 is connected to the transmission case 9. FIG. 3 is a rear left perspective view of the lifting device 8. FIG. 4 is a left side view illustrating raising/lowering operation of the lifting device 8. As illustrated in FIGS. 3 and 4, the lifting device 8 includes lift arm(s) 21, a top link 22, lower link(s) 23, lift rod(s) 24, and lift cylinder(s) 26.

As illustrated in FIG. 3, the lift arm(s) 21 includes a first lift arm 21L and a second lift arm 21R. The first lift arm 21L is provided on of opposite sides in the machine body width direction (on the left side). The second lift arm 21R is provided on the other of the opposite sides in the machine body width direction (on the right side). The first lift arm 21L and the second lift arm 21R are provided swingably on the machine body 2. Specifically, the first lift arm 21L and the second lift arm 21R have front end portions pivotably supported on an upper portion of the transmission case 9 and extend in the rearward direction.

The top link 22 is provided between the first lift arm 21L and the second lift arm 21R, and a front end portion is pivotally supported on the upper portion of the transmission case 9. The lower link(s) 23 includes a first lower link 23L and a second lower link 23R. Front end portions of the first lower link 23L and the second lower link 23R are pivotally supported on a lower portion of the transmission case 9. The lift rod(s) 24 includes a first lift rod 24L and a second lift rod 24R. The first lift rod 24L, has an upper end portion connected to a rear end portion of the first lift arm 21L, and a lower end portion connected to an intermediate portion of the first lower link 23L in the length direction. The second lift rod 24R has an upper end portion connected to a rear end portion of the second lift arm 21R, and a lower end portion connected to an intermediate portion of the second lower link 23R in the length direction.

As illustrated in FIGS. 3 and 4, joints 25 configured to attach the working device 3 are provided at a rear end portion of the top link 22 and rear end portions of the lower link 23. The working device 3 is linked to the rear end portion of the top link 22 and the rear end portions of the lower link 23, so that the working device 3 is coupled to a rear portion of the working machine 1 such that the working device 3 can be raised and lowered. Thus, the working device 3 is coupled to the lift arm 21 via the lift rod 24 and the lower links 23.

As illustrated in FIGS. 3 and 4, each lift cylinder 26 is a hydraulic actuator (hydraulic cylinder) 26 to be actuated by hydraulic fluid. As illustrated in FIG. 2, the lift cylinder 26 is a single-acting cylinder and includes a tubular cylinder tube 26a and a piston rod 26b having an end portion thereof slidably inserted in the cylinder tube 26a. The inner space of the cylinder tube 26a is divided into a bottom fluid chamber and a rod fluid chamber by a piston contained movably in a direction of the axis of the cylinder tube 26a (axial direction). Thus, when hydraulic fluid is supplied to the bottom fluid chamber, the lift cylinder 26 extends. When hydraulic fluid is discharged from the bottom fluid chamber, the lift cylinder 26 retracts.

The lift cylinders 26 include a first lift cylinder 26L and a second lift cylinder 26R. The first lift cylinder 26L has an end portion connected to the first lift arm 21L, and another end portion connected to a lower left portion of the transmission case 9. The second lift cylinder 26R had an end portion connected to the second lift arm 21R, and another end portion connected to a lower right portion of the transmission case 9. When the lift cylinders 26 are driven, the first lift arm 21L and the second lift arm 21R swing in an up-and-down direction.

As illustrated in FIG. 2, the working machine 1 includes a hydraulic pump P, control valve(s) 30, hydraulic device(s) 33, and switching valve(s) 34. The hydraulic pump P is actuated by power produced by the prime mover 5. The hydraulic pump P delivers hydraulic fluid to actuate the drive device 8 and the like of the working machine 1. The hydraulic pump P delivers hydraulic fluid stored in a hydraulic fluid tank T. The hydraulic pump P includes a variable displacement hydraulic pump P (such as a swash plate variable displacement axial pump).

The drive device 8 includes hydraulic actuator(s) 26 to be actuated by hydraulic fluid delivered by the hydraulic pump P. The drive device 8 includes driven member(s) 21 to be operated by driving the hydraulic actuator(s) 26. An example of the drive device 8 is a lifting device 8 described above. That is, the driven member(s) 21 is/are the lift arm(s) 21, and the hydraulic actuator(s) 26 is/are the lift cylinder(s) 26.

The control valve(s) 30 adjusts hydraulic fluid to actuate the hydraulic actuator(s) 26. Each control valve 30 is energized by control current outputted from the controller 11 to change the opening. With this, the control valve 30 is capable of adjusting hydraulic fluid to actuate the lift cylinder 26. An example of the control valve 30 is a proportional flow control solenoid valve. The flow rate of hydraulic fluid supplied to the hydraulic actuator 26 increases as the current value I of the control current outputted from the controller 11 increases.

In the present embodiment, the control valve(s) 30 includes a first control valve (raising control valve) 30a to control the extension of the lift cylinder 26 and a second control valve (lowering control valve) 30b to control the retraction of the lift cylinder 26. The first control valve 30a and the second control valve 30b are connected to both the first lift arm 21L and the second lift arm 21R and cause the first lift arm 21L and the second lift arm 21R to extend or retract at the same time.

The first control valve 30a is provided in a fluid passage (first fluid passage) 31 that connects the hydraulic pump P and the bottom fluid chamber to each other. The first control valve 30a is capable of supplying hydraulic fluid delivered by the hydraulic pump P to the bottom fluid chamber by changing the opening.

The second control valve 30b is provided in a fluid passage (second fluid passage) 31 that connects the bottom fluid chamber and the hydraulic fluid tank T to each other. The second control valve 30b is capable of allowing hydraulic fluid from the bottom fluid chamber to be drained to the hydraulic fluid tank T by changing the opening.

Accordingly, when the controller 11 outputs control current to the first control valve 30a and the opening of the first control valve 30a is changed, the hydraulic fluid delivered by the hydraulic pump P is supplied to the bottom fluid chamber and the lift cylinder 26 extends, so that the lift arm 21 is raised. On the contrary, when the controller 11 outputs control current to the second control valve 30b and the opening of the second control valve 30b is changed, the hydraulic fluid in the bottom fluid chamber is drained to the hydraulic fluid tank T and the lift cylinder 26 is allowed to retract. Thus, the lift cylinder 26 retracts due to the weight of the working device 3 and/or the lift arm 21, so that the lift arm 21 is lowered.

Note that, with regard to the control valve 30, the hydraulic system thereof is not limited to the structure described above, provided that the hydraulic actuator 26 can be controlled. For example, the first control valve 30a and the second control valve 30b are connected to the bottom fluid chambers in the above example. However, the second control valve 30b may be provided in a fluid passage that connects the hydraulic pump P and the rod fluid chamber to each other so that the hydraulic fluid delivered by the hydraulic pump P is supplied to the rod fluid chamber by changing the opening.

In the embodiment described above, the openings of the first control valve 30a and the second control valve 30b are changed, so that the lift cylinder 26 is controlled. However, the control valve(s) 30 may be a three-way solenoid switching valve that can switch between a first position in which the lift cylinder 26 extends, a second position in which the lift cylinder 26 stops being driven, and a third position in which the lift cylinder 26 retracts.

In the embodiment described above, the first control valve 30a and the second control valve 30b directly adjust the hydraulic fluid to actuate the lift cylinder 26. However, the first control valve 30a and the second control valve 30b may cause pilot fluid to act on a control valve connected to the lift cylinder(s) 26, and the control valve may adjust the hydraulic fluid to actuate the lift cylinder(s) 26. The structure of the hydraulic system is not limited to the structure described above.

The hydraulic device(s) 33 is/are actuated by hydraulic fluid delivered by the hydraulic pump P. Examples of the hydraulic device(s) 33 include a front loader attached to a front portion of the machine body 2, a working portion of the working device 3 actuated by hydraulic fluid, and a power steering mechanism.

The switching valve(s) 34 adjust(s) hydraulic fluid to actuate the hydraulic device(s) 33. The switching valve(s) 34 is/are energized by control current outputted from the controller 11 to change the opening. The control valve(s) 30 is/are, for example, proportional flow control solenoid valve(s), and increase(s) the flow rate of hydraulic fluid supplied to the hydraulic device(s) 33 as the current value I of control current outputted from the controller 11 increases.

Note that the drive device 8 is not limited to the lifting device 8, provided that the drive device 8 includes the hydraulic actuator(s) 26 and the driven member(s) 21. The drive device 8 may be a hydraulic device 33 (such as a front loader or the working portion of the working device 3 to be actuated by hydraulic fluid). In the case where the drive device 8 is a front loader, the hydraulic actuator(s) 26 is/are boom cylinder(s) and/or bucket cylinder(s) to actuate the front loader. In the case where the drive device 8 is a working portion of the working device 3, the hydraulic actuator(s) 26 is/are, for example, hydraulic cylinder(s) and/or hydraulic motor(s) to actuate the working portion.

In an example described according to the embodiment described above, the working machine 1 includes the drive device 8 including the hydraulic actuator(s) 26. However, the working machine 1 does not need to include the drive device 8, provided that the working machine 1 includes at least hydraulic actuator(s) 26 to be actuated by hydraulic fluid delivered by the hydraulic pump P.

As illustrated in FIG. 2, the working machine 1 includes a load sensing system 35. The load sensing system 35 controls the hydraulic pump P such that a differential pressure between load pressure when the hydraulic actuator(s) 26 is/are in operation and the delivery pressure of the hydraulic pump P is constant (controls the delivery flow rate VF of the hydraulic pump P). In the present embodiment, the load sensing system 35 controls the hydraulic pump P such that a differential pressure between the load pressure when the hydraulic actuator(s) 26 is/are in operation and the hydraulic device(s) 33 is/are in operation and the delivery pressure of the hydraulic pump P is constant. The load sensing system 35 includes a PLS fluid passage 36, a PPS fluid passage 37, a flow rate compensation piston 38, and a flow rate compensation valve 39.

The PLS fluid passage 36 transmits a load pressure that is highest among the load pressures on the control valve(s) 30 and the switching valve(s) 34 (maximum load pressure) as a PLS signal pressure to the flow rate compensation valve 39. The PLS fluid passage 36 is connected to the control valve(s) 30 and the switching valve(s) 34. Specifically, the PLS fluid passage 36 is connected to the control valve 30 and the switch valve 34 that are connected to the hydraulic pump P and that adjust the flow rate of hydraulic fluid delivered by the hydraulic pump P, among the control valve(s) 30 and the switching valve(s) 34. For example, as illustrated in FIG. 2, the first control valve 30a of the control valve(s) 30 to actuate the lift cylinder(s) 26 is connected to the PLS fluid passage 36.

The PLS fluid passage 36 is provided with a high-pressure selection valve 36a to detect the maximum load pressure from the load pressures on the control valve(s) 30 and the switching valve(s) 34. Note that the PLS fluid passage 36 may be provided with a check valve instead of the high-pressure selection valve 36a. The PLS fluid passage 36 is also provided with a pressure compensation valve 36b for the control valve(s) 30 and the switching valve(s) 34.

The PPS fluid passage 37 transmits the delivery pressure of the hydraulic pump P as a PPS signal pressure to the flow rate compensation valve 39. The PPS fluid passage 37 connects the hydraulic pump P and the flow rate compensation valve 39, and is subjected to "PPS signal pressure" which is the delivery pressure of hydraulic fluid from the hydraulic pump P. The delivery pressure of hydraulic fluid from the hydraulic pump P is transmitted to the flow rate compensation valve 39.

The flow rate compensation piston 38 acts on a spring to press the swash plate of the hydraulic pump P to change the angle of the swash plate, thus controlling the delivery flow rate VF of the hydraulic pump P. In the present embodiment, the hydraulic pump P is configured such that the swash plate is pressed via the spring in a direction to increase the delivery flow rate VF. The flow rate compensation piston 38 applies a force against the pressing force of the spring to the swash plate. Therefore, when the pressure applied to the flow rate compensation piston 38 is removed, the angle of the swash plate of the hydraulic pump P increases to the maximum, and the delivery flow rate VF increases to the maximum (reaches the maximum delivery flow rate).

The flow rate compensation piston 38 is connected to the flow rate compensation valve 39, and the pressure acting on the flow rate compensation piston 38 is controlled by the flow rate compensation valve 39.

The flow rate compensation valve 39 is configured to control the flow rate compensation piston 38 based on the PLS signal pressure and the PPS signal pressure. The flow rate compensation valve 39 controls the pressure applied to the flow rate compensation piston 38 such that a difference (differential pressure) between the PPS signal pressure and the PLS signal pressure is a predetermined pressure. That is, the flow rate compensation valve 39 controls the pressure applied to the flow rate compensation piston 38 such that the differential pressure between the PPS signal pressure and the PLS signal pressure is constant.

Thus, the load sensing system 35 changes the angle of the swash plate such that the differential pressure is constant, making it possible to adjust the delivery flow rate VF of the hydraulic pump P irrespective of the maximum load pressure. Note that, in the present embodiment, the working machine 1 includes the load sensing system 35, but the working machine 1 does not need to include the load sensing system 35.

The operation of the drive device 8 will now be described in detail. The operating equipment 10 includes an operation actuator (manual operator) 42 to operate the drive device 8. The manual operator 42 is a portion of the operating equipment 10 to operate the target value of the position of the driven member(s) 21. The controller 11 calculates a deviation ΔD of the actual position of the driven member(s) 21 from a predetermined target value in response to the operation of the manual operator 42 and controls the control valve(s) 30. In the present embodiment, the controller 11 controls the control valve(s) 30 such that the deviation ΔD is zero. In the following description, the manual operator 42 to operate the lifting device 8 is discussed as an example.

As illustrated in FIG. 2, the working machine 1 includes a second detector 13 to detect the actual position of the lift arm(s) 21. The second detector 13 is a sensor to calculate the position of the lift cylinder(s) 26. The second detector 13 is connected to the controller 11 and outputs a detected signal (detection signal) to the controller 11.

In the present embodiment, the second detector 13 is a sensor (lift arm sensor) to detect the angle of the lift arm(s) 21, and the controller 11 controls the control valve(s) 30 based on the angle of the lift arm(s) 21 as the position of the lift arm(s) 21. That is, the controller 11 controls the control valve(s) 30 to actuate the lift cylinder(s) 26 such that the deviation ΔD between the actual position (actual angle of the lift arm(s) 21) and the target value (target angle of the lift arm(s) 21) is zero. An example of the lift arm sensor 13 is a rotational displacement variable resistor such as a potentiometer. The lift arm sensor 13 outputs a signal (angle signal) of the detected angle to the controller 11.

The lift arm sensor 13 is not limited, provided that the angle of the lift arm(s) 21 can be detected. For example, the second detector 13 may be a lift cylinder sensor to detect the extension (stroke) of the lift cylinder(s) 26, provided that parameter(s) to detect the actual position of the lift arm(s) 21 can be detected. In such a case, the controller 11 controls the control valve(s) 30 based on the degree of extension of the lift cylinder(s) 26 as the position of the lift arm(s) 21. That is, the controller 11 controls the control valve(s) 30 to actuate the lift cylinder(s) 26 such that the deviation ΔD between the actual position (the degree of the actual extension of the lift cylinder 26) and the target value (the degree of the target extension of the lift cylinder 26) is zero.

The controller 11 may control the control valve(s) 30 based on the height of predetermined portion(s) (e.g., rear end portion(s)) of the lift arm(s) 21 in the vertical direction as the position of the lift arm(s) 21. In such a case, the controller 11 calculates the height of the rear end portion(s) of the lift arm(s) 21 in the vertical direction based on the parameter(s) (the actual angle of the lift arm(s) 21and/ or the degree of the actual extension of the lift cylinder(s) 26) detected by the second detector 13 and on a predetermined arithmetic expression. The controller 11 controls the control valve(s) 30 to actuate the lift cylinder(s) 26 such that the deviation ΔD between the actual position (such as the height of the rear end portion(s) of the lift arm(s) 21) and the target value (such as the target height of the rear end portion(s) of the lift arm(s) 21) is zero.

In an example described below, the manual operator 42 controls the angle of the lift arm(s) 21 as the target value, and the controller 11 controls the control valve(s) 30 such that the deviation ΔD between the actual position (the actual angle of the lift arm(s) 21) and the target value (the target angle of the lift arm(s) 21) is zero.

An example of the manual operator 42 is a position lever 42a. The position lever 42a is used to raise and lower the working device 3 and is operated by being swung. The position lever 42a is provided with a potentiometer to detect the amount of operation of the position lever 42a. The controller 11 can define the target value (target angle) of the lift arm(s) 21 based on an operation signal outputted from the potentiometer. As the amount of operation of the position lever 42a increases, the target value defined by the controller 11 increases according to the amount of operation. As the amount of operation of the position lever 42a decreases, the target value defined by the controller 11 decreases according to the amount of operation.

The manual operator 42 is not limited to the position lever 42a but may include a lifting manual operator 42b that differs from the position lever 42a and that is used to raise and lower the working device 3. Examples of the lifting manual operator 42b include a push button switch such as a tactile switch and a seesaw switch. The lifting manual operator 42b is connected to the controller 11 and outputs an operation signal to the controller 11. The controller 11 defines the target value according to the amount of operation of the lifting manual operator 42b (such as the time for which the lifting manual operator 42b is operated or the number of times the lifting manual operator 42b is operated).

As illustrated in FIG. 1, the position lever 42a is provided inside the protection structure 6, and the lifting manual operator 42b is provided outside (for example, laterally from the lifting device 8, or a rear fender) the protection structure 6.

In the example described above, the controller 11 defines a target value according to the amount of operation of the manual operator 42. However, the working machine 1 may include an upper limit manual operator 43 to operate the upper limit value of the position of the lift arm(s) 21 and a lower limit manual operator 44 to operate the lower limit value of the position of the lift arm 21, and the manual operator 42 may include a raising/lowering switch 45 to raise and lower the lift arm(s) 21 up to the upper limit value or the lower limit value of the position of the lift arm(s) 21.

In the case where the working machine 1 includes the upper limit manual operator 43 and the lower limit manual operator 44, the controller 11 actuates the lift arm(s) 21 within the range from the upper limit value to the lower limit value of the position of the lift arm(s) 21, inclusive, also when controlling the control valve(s) 30 according to the operation of the position lever 42a and/or the lifting manual operator 42b as the manual operator 42.

The controller 11 calculates the deviation ΔD and controls the control valve 30 (which may be hereinafter the control valve 30 or the lift arms 30) such that the flow rate of hydraulic fluid from the control valve 30 is equal to or less than the maximum flow rate MF based on the relationship between the deviation ΔD and the target flow rate TF of hydraulic fluid to actuate the hydraulic actuator(s) and on the relationship between the current value I of control current outputted to a predetermined control valve 30 and the flow rate of the hydraulic fluid from the predetermined control valve 30. The maximum flow rate MF described herein indicates the maximum value of the flow rate of hydraulic fluid that can be discharged from the control valve 30 under control of the controller 11.

For example, the controller 11 determines each current value I of control current to the control valve(s) 30 based on the deviation ΔD, on a graph that represents the relationship between the deviation ΔD and the target flow rate TF (first graph) M1, and on a graph that represents the relationship between the current value I of control current outputted to predetermined control valve(s) and the supply flow rate DF of fluid from the predetermined control valve(s) 30 (second graph) M2. The first graph M1 and the second graph M2 are stored in the storing unit 11a in advance.

In the case where the lift arm 21 (which may be hereinafter the lift arm 21 or the lift arms 21) is raised, the target value is higher than the actual position, and therefore the deviation ΔD is positive. In the case where the lift cylinder 26 (which may be hereinafter the lift cylinder 26 or the lift cylinders 26) is lowered, the target value is lower than the actual position, and therefore the deviation ΔD is negative. In the following description, however, the absolute value of the difference between the target value and the actual position is used as the deviation ΔD for convenience of description.

The first graph M1 and the second graph M2 may be the same or may differ from each other between the case where the lift arm 21 is raised and the case where the lift arm 21 is lowered.

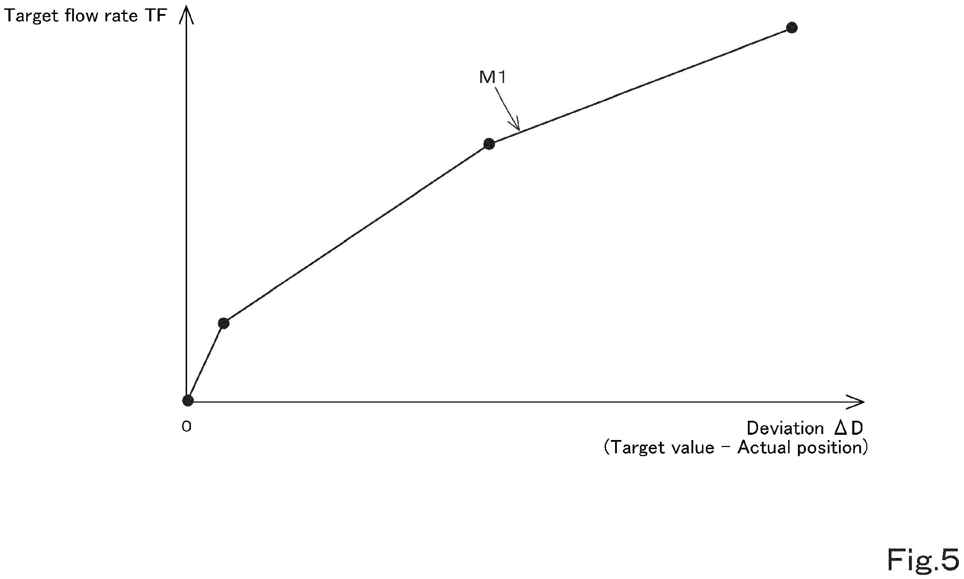

FIG. 5 illustrates an example of the first graph M1. In the chart illustrated in FIG. 5, the horizontal axis represents the deviation ΔD between the actual position and the target value, and the vertical axis represents the target flow rate TF of hydraulic fluid to actuate the hydraulic actuator 26. On the example of the first graph M1 illustrated in FIG. 5, the target flow rate TF changes such that, as the deviation ΔD of the actual position from the target value increases, the target flow rate TF increases sharply and then increases gradually.

The first graph M1 illustrated in FIG. 5 is merely an example. The target flow rate TF may change such that the target flow rate TF increases gradually and then increases sharply or proportionally increases in a substantially straight line as the deviation ΔD of the actual position from the target value increases.

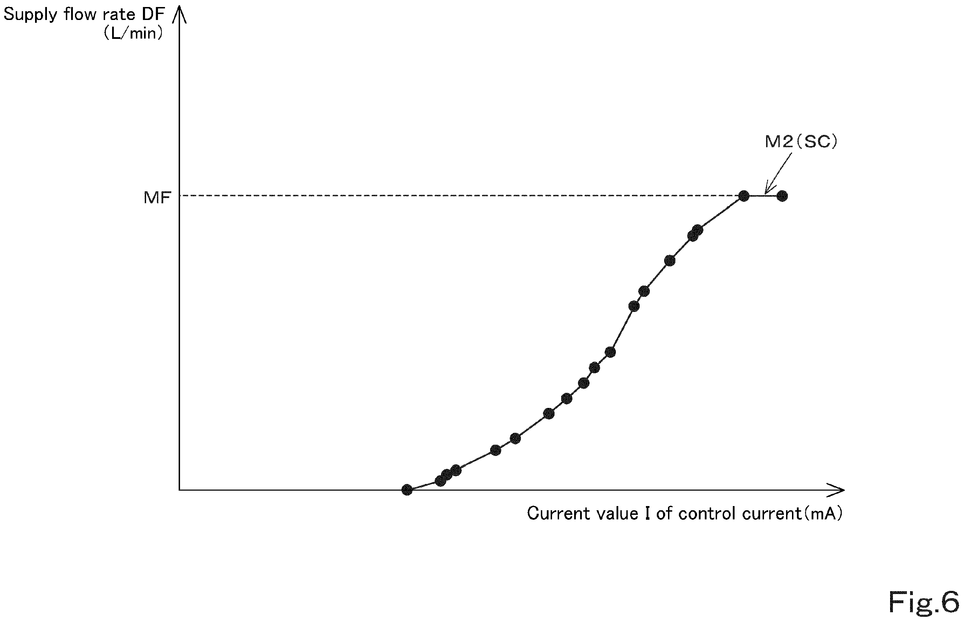

FIG. 6 illustrates an example of the second graph M2. The second graph M2 represents the relationship between the current value I of control current outputted to standard control valve(s) as predetermined control valve(s) 30 and the flow rate of hydraulic fluid from the standard control valve(s), and is defined based on standard flow rate characteristics (standard flow characteristic graph) SC. It is noted here that the flow rate of hydraulic fluid from the standard control valve (supply flow rate DF) in the standard flow rate characteristic graph SC is the flow rate of hydraulic fluid which can be discharged from the standard control valve upon receipt of control current having a current value I. The standard control valve is a control valve 30 that is a central-flow-rate control valve. That is, the second graph M2 is defined based on flow rate characteristics SC of the standard control valve of design data or theoretical data. The standard flow rate characteristics SC are flow rate characteristics of the standard control valve, and are, for example, flow rate characteristics of design data or theoretical data. For this reason, the standard flow rate characteristics SC are design or theoretical flow rate characteristics of the standard control valve.

The standard flow rate characteristics SC may be obtained by performing arithmetic processing such as averaging or standardization of measured data of flow rate characteristics regarding a plurality of control valves 30. That is, the standard flow rate characteristics SC may be based on a plurality of pieces of measured data. The standard flow rate characteristics SC may be those indicated by standard product specification data of a control valve 30 provided by, for example, a manufacturer.

In the chart illustrated in FIG. 6, the horizontal axis represents the value I of control current (hereinafter may be referred to as "current value I"), and the vertical axis represents supply flow rate DF. In the example of the second graph M2 illustrated in FIG. 6, as the current value I of the control current increases, the supply flow rate DF changes such that the supply flow rate DF increases gradually and then increases sharply.

The second graph M2 in FIG. 6 is merely an example. The second graph M2 need only be defined based on flow rate characteristics of design data or theoretical data of a predetermined control valve 30.

Therefore, the controller 11 first calculates the deviation ΔD of the actual position from the target value and then acquires the first graph M1 and the second graph M2 depending on the direction of operation (raising or lowering) of the lift arm 21. The controller 11 acquires the target flow rate TF based on the deviation ΔD and the first graph M1. The controller 11, after acquiring the target flow rate TF, acquires the current value I of the control current based on the target flow rate TF and the second graph M2. With this, the controller 11 outputs the acquired current value I to the control valve(s) 30 to control the control valve(s) 30.

It is noted here that the controller 11 gradually reduces the current value I as the deviation ΔD gradually decreases. The current value I of the control current to the control valve 30 is set to zero by the controller 11 when the deviation ΔD is zero. The controller 11 thus controls the control valve 30 based on the operation of the manual operator 42 to drive the lift cylinder 26.

The controller 11 controls the control valve 30 to limit the maximum flow rate MF of hydraulic fluid supplied from the control valve 30 to the hydraulic actuator 26 such that the maximum flow rate MF does not exceed a limit flow rate LF, based on the actual rotation speed of the prime mover 5. The limit flow rate LF corresponding to a certain rotation speed R of the prime mover 5 is equal to or less than the maximum delivery flow rate of the hydraulic pump P corresponding to the certain rotation speed R. Specifically, each limit flow rate LF is less than the maximum delivery flow rate corresponding to the corresponding rotation speed R of the prime mover 5.

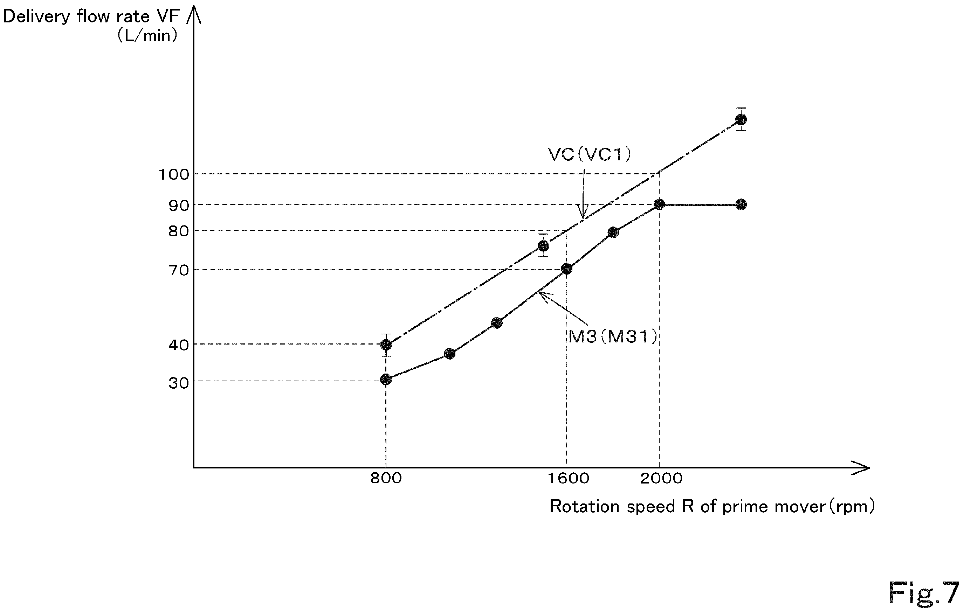

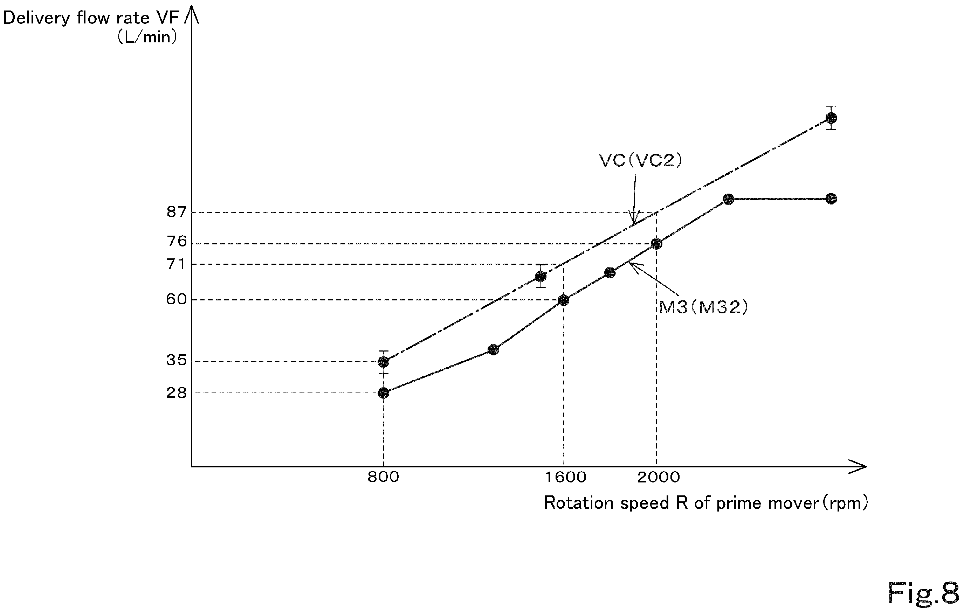

In the present embodiment, the controller 11 acquires a graph M3 that represents the relationship between rotation speeds R of the prime mover 5 and limit flow rates LF (supply flow rate limit graph) as illustrated in FIGS. 7 and 8, and controls the control valve 30 based on the actual rotation speed of the prime mover 5 and the supply flow rate limit graph M3. The supply flow rate limit graph M3 is stored in the storing unit 11a in advance. The controller 11 acquires the supply flow rate limit graph M3 stored in the storing unit 11a, and, based on the actual rotation speed of the prime mover 5 detected by the first detector 12 and the supply flow rate limit graph M3, controls the control valve 30 to limit the maximum flow rate MF of hydraulic fluid supplied from the control valve 30 to the hydraulic actuator 26 such that the flow rate of the hydraulic fluid does not exceed the limit flow rate LF.

The supply flow rate limit graph M3 is calculated by, for example, an information processing terminal 50 (such as a personal computer) of, for example, a working machine manufacturer or dealer and is stored by the information processing terminal 50 in the storing unit 11a. A delivery flow rate characteristic graph VC represents the maximum delivery flow rate of the hydraulic pump P corresponding to the rotation speed R of the prime mover 5. The supply flow rate limit graph M3 is lower, in terms of the limit flow rate LF corresponding to the rotation speed R of the prime mover 5, than a predetermined delivery flow rate characteristic graph VC. The delivery flow rate characteristic graph VC represents the maximum delivery flow rate of the hydraulic pump P against the rotation speed R of the prime mover 5.

FIGS. 7 and 8 illustrate examples of the delivery flow rate characteristic graph VC and the supply flow rate limit graph M3. In the charts illustrated in FIGS. 7 and 8, the horizontal axis represents the rotation speed R of the prime mover 5, and the vertical axis represents the flow rate of hydraulic fluid delivered by the hydraulic pump P (delivery flow rate) VF. In the examples illustrated in FIGS. 7 and 8, the delivery flow rate characteristic graph VC is represented by dot-dash line, and the supply flow rate limit graph M3 represented by solid line.

The delivery flow rate characteristics VC are defined based on characteristics of the prime mover 5 of design data or theoretical data and characteristics of the hydraulic pump P of design data or theoretical data. The delivery flow rate characteristics VC may be obtained by performing arithmetic processing such as averaging or standardization of measured data of flow rate characteristics regarding a plurality of combinations of a prime mover 5 and a hydraulic pump P. That is, the delivery flow rate characteristics VC may be based on a plurality of pieces of measured data.

The hydraulic pump P is selected based on the characteristics of the prime mover 5. For example, in a case that the prime mover 5 is a maximum-torque prime mover in which torque corresponding to the rotation speed R is relatively high, a hydraulic pump P suitable for the maximum-torque prime mover 5 is selected. On the contrary, in a case that the prime mover 5 is a minimum-torque prime mover in which torque corresponding to the rotation speed R is relatively low, a hydraulic pump P suitable for the minimum-torque prime mover 5 is selected.

FIG. 7 illustrates a delivery flow rate characteristic graph (maximum delivery flow rate characteristic graph) VC1 for the maximum-torque prime mover 5 and the hydraulic pump P corresponding to the maximum-torque prime mover 5. FIG. 8 illustrates a delivery flow rate characteristic graph (minimum delivery flow rate characteristic graph) VC2 for the minimum-torque prime mover 5 and the hydraulic pump P corresponding to the minimum-torque prime mover 5. The delivery flow rate characteristic graph VC changes such that the maximum delivery flow rate increases in proportion to the rotation speed R of the prime mover 5 as the rotation speed R of the prime mover 5 increases. The maximum delivery flow rate characteristic graph VC1 is higher, in terms of the maximum delivery flow rate corresponding to the rotation speed R of the prime mover 5, than the minimum delivery flow rate characteristic graph VC2, making it possible to reach the same maximum delivery flow rate at a lower rotation speed R.

Note that, in the examples illustrated in FIGS. 7 and 8, the maximum delivery flow rate characteristic graph VC1 and the minimum delivery flow rate characteristic graph VC2 are described as examples. However, the delivery flow rate characteristic graph VC is not limited to these two graphs, i.e., the maximum delivery flow rate characteristic graph VC1 and the minimum delivery flow rate characteristic graph VC2, but may include a plurality of delivery flow rate characteristic graphs VC such as a delivery flow rate characteristic graph (central delivery flow rate characteristic graph) for a central-torque prime mover 5 and a hydraulic pump P corresponding to the central-torque prime mover 5.

The limit flow rate LF is calculated from a corresponding maximum delivery flow rate in the delivery flow rate characteristic graph VC. The supply flow rate limit graph M3 is calculated by converting maximum delivery flow rates in the delivery flow rate characteristic graph VC into limit flow rates LF. Each limit flow rate LF (supply flow rate limit graph M3) is calculated using a delivery flow rate characteristic graph VC, and the delivery flow rate characteristic graph VC is selected from one or more delivery flow rate characteristic graphs VC based on the combination of a prime mover 5 and a hydraulic pump P. That is, a delivery flow rate characteristic graph VC is selected based on the combination of the prime mover 5 and the hydraulic pump P included in the working machine 1, and a supply flow rate limit graph M3 is calculated. In other words, each supply flow rate limit graph M3 is defined based on the combination of a prime mover 5 and a hydraulic pump P. The conversion of the delivery flow rate characteristic graph VC into the supply flow rate limit graph M3 is the same between all delivery flow rate characteristic graphs VC.

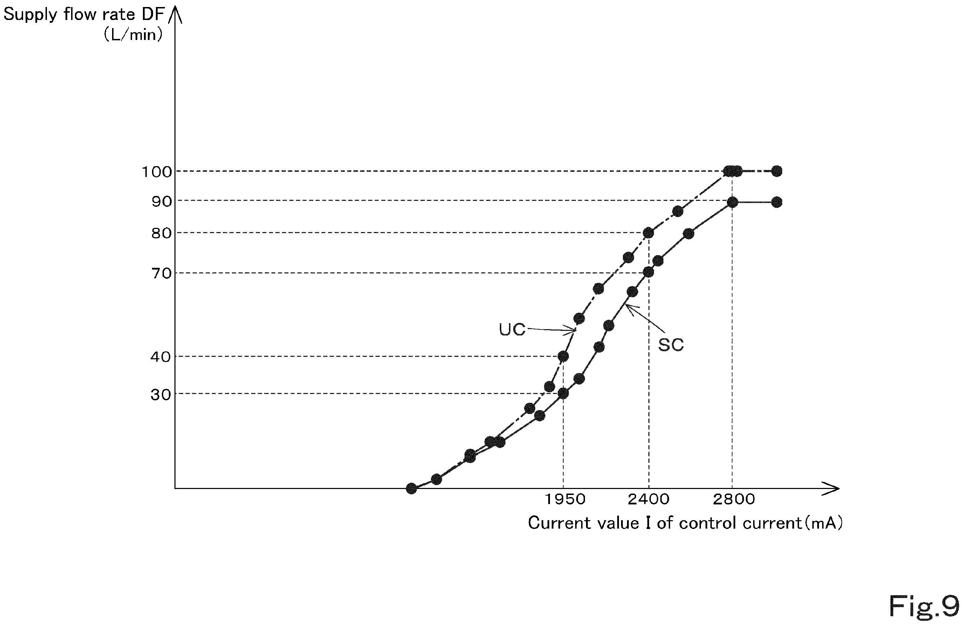

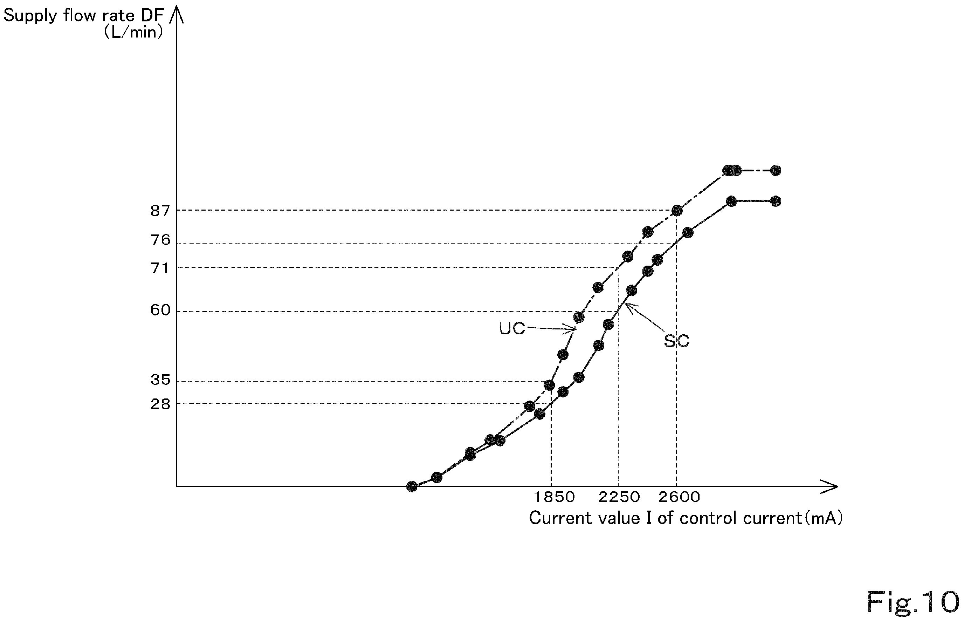

The following details the calculation of the limit flow rates LF (supply flow rate limit graph M3). Each limit flow rate LF is calculated by converting a corresponding maximum delivery flow rate based on a standard flow rate characteristic graph SC and a maximum flow rate characteristic graph UC for a maximum-flow-rate control valve 30 that is higher in the flow rate of hydraulic fluid than the standard flow rate characteristic graph SC. That is, the supply flow rate limit graph M3 is calculated by converting maximum delivery flow rates in the delivery flow rate characteristic graph VC into limit flow rates LF based on the standard flow rate characteristic graph SC and the maximum flow rate characteristic graph UC. FIGS. 9 and 10 illustrate the standard flow rate characteristic graph SC and the maximum flow rate characteristic graph UC. In FIGS. 9 and 10, the standard flow rate characteristic graph SC is represented by solid line, and the maximum flow rate characteristic graph UC is represented by dot-dash line. In the charts illustrated in FIGS. 9 and 10, the horizontal axis represents the current value I of control current, and the vertical axis represents the supply flow rate DF.

The maximum flow rate characteristics UC are the flow rate characteristics of the maximum-flow-rate control valve 30, and are, for example, flow rate characteristics of designed data or theoretical data. That is, the maximum flow rate characteristics UC are designed or theoretical flow rate characteristics of the maximum-flow-rate control valve 30. The maximum flow rate characteristics UC may be acquired by performing arithmetic processing such as averaging or standardization on the measured data of flow rate characteristics measured regarding a plurality of control valves 30. That is, the maximum flow rate characteristics UC may be based on a plurality of pieces of measured data.

Each limit flow rate LF in the supply flow rate limit graph M3 is calculated by converting the corresponding maximum delivery flow rate into the flow rate of hydraulic fluid from the standard control valve by: obtaining a maximum delivery flow rate corresponding to the corresponding rotation speed R of the prime mover 5 in the delivery flow rate characteristic graph VC; and converting the obtained maximum delivery flow rate into the flow rate of hydraulic fluid from the standard control valve by (i) obtaining a result corresponding to the obtained maximum delivery flow rate based on the maximum flow rate characteristic graph UC and (ii) obtaining the flow rate of hydraulic fluid from the standard control valve corresponding to the obtained result based on the standard flow rate characteristic graph SC.

Specifically, each limit flow rate LF in the supply flow rate limit graph M3 is calculated by converting the corresponding maximum delivery flow rate into the flow rate of hydraulic fluid from the standard control valve (supply flow rate DF) by: obtaining a maximum delivery flow rate corresponding to the corresponding rotation speed R of the prime mover 5 in the delivery flow rate characteristic graph VC; and converting the obtained maximum delivery flow rate into the flow rate of hydraulic fluid from the standard control valve (supply flow rate DF) by (i) obtaining a current value I corresponding to the obtained maximum delivery flow rate based on the maximum flow rate characteristic graph UC and (ii) obtaining, based on the standard flow rate characteristic graph SC and the obtained current value I, the flow rate of hydraulic fluid supplied from the standard control valve upon receipt of the control current having the obtained current value I.

The following discusses a flow in which the information processing terminal 50 converts each maximum delivery flow rate corresponding to the corresponding rotation speed R of the prime mover 5 into a limit flow rate LF. The following first discusses the conversion of a delivery flow rate characteristic graph VC into a supply flow rate limit graph M3. The information processing terminal 50 refers to a delivery flow rate characteristic graph VC based on the combination of a prime mover 5 and a hydraulic pump P. The information processing terminal 50 receives input of the combination of the prime mover 5 and the hydraulic pump P from the operator via predetermined input interface(s) (such as a keyboard and/or a mouse) and refers to a delivery flow rate characteristic graph VC in an external server or a storage medium such as a solid-state drive (SSD) or a hard disk drive (HDD) which is communicably connected, based on the combination.

Next, the information processing terminal 50 refers to the delivery flow rate characteristic graph VC and acquires the maximum delivery flow rate at a specific rotation speed (hereinafter referred to as a specific rotation speed) in the delivery flow rate characteristic graph VC. The information processing terminal 50 refers to a maximum flow rate characteristic graph UC in, for example, a storage medium or an external server and refers to the current value I corresponding to the acquired maximum delivery flow rate. That is, the information processing terminal 50 refers to the minimum value (hereinafter referred to as a reference current value) of the current value I of control current to be outputted to the maximum-flow-rate control valve 30 in the case where the maximum-flow-rate control valve 30 has the opening that allows supply at the maximum delivery flow rate.

The information processing terminal 50 refers to a standard flow rate characteristic graph SC in, for example, the storage medium or the external server and refers to the supply flow rate DF as the limit flow rate LF.

The information processing terminal 50 associates the specific rotation speed and the limit flow rate LF with each other and repeats the flow described above to convert each maximum delivery flow rate corresponding to its corresponding rotation speed R of the prime mover 5 in the delivery flow rate characteristic graph VC into a supply flow rate DF, thus calculating a supply flow rate limit graph M3. The information processing terminal 50 causes the storing unit 11a of the controller 11 to store the calculated supply flow rate limit graph M3.

Thus, since the standard flow rate characteristic graph SC is less in terms of the supply flow rate DF than the maximum flow rate characteristic graph UC, as illustrated in FIGS. 7 and 8, the supply flow rate limit graph M3 is such that each limit flow rate LF is less than the corresponding maximum delivery flow rate in the delivery flow rate characteristic graph VC at any rotation speed R. Furthermore, since the maximum delivery flow rate characteristic graph VC1 is higher in terms of the maximum delivery flow rate corresponding to each rotation speed R of the prime mover 5 than the minimum delivery flow rate characteristic graph VC2, as illustrated in FIGS. 7 and 8, the supply flow rate limit graph M3 (upper limit graph M31) obtained by converting the maximum delivery flow rate characteristic graph VC1 is higher in terms of the limit flow rate LF than the supply flow rate limit graph M3 (lower limit graph M32) obtained by converting the minimum delivery flow rate characteristic graph VC2 at each rotation speed R.

The following describes, with reference to FIGS. 7 and 9, the conversion of the maximum delivery flow rates into the limit flow rates LF in cases where the maximum-torque prime mover 5 is combined with a hydraulic pump P corresponding to the maximum-torque prime mover 5 and where the specific rotation speed is 800 rpm, 1600 rpm, or 2000 rpm. On the maximum delivery flow rate characteristic graph VC1 illustrated in FIG. 7, the maximum delivery flow rate in the case where the rotation speed R of the prime mover 5 is 800 rpm is 40 L/min. Next, on the maximum flow rate characteristic graph UC, the reference current value in the case where the supply flow rate DF is 40 L/min is 1950 mA. On the standard flow rate characteristic graph SC, the supply flow rate DF of hydraulic fluid supplied from the standard control valve upon receipt of control current having a reference current value of 1950 mA is 30 L/min. With this, the information processing terminal 50 associates the specific rotation speed (800 rpm) and the supply flow rate DF (30 L/min) with each other and converts the maximum delivery flow rate (40 L/min) into the supply flow rate DF (30 L/min).

The maximum delivery flow rate in the case where the rotation speed R of the prime mover 5 is 1600 rpm is 80 L/min. Next, on the maximum flow rate characteristic graph UC, the reference current value in the case where the supply flow rate DF is 80 L/min is 2400 mA. On the standard flow rate characteristic graph SC, the supply flow rate DF of hydraulic fluid supplied from the standard control valve upon receipt of control current having a reference current value of 2400 mA is 70 L/min. With this, the information processing terminal 50 associates the specific rotation speed (1600 rpm) and the supply flow rate DF (70 L/min) with each other and converts the maximum delivery flow rate (80 L/min) into the supply flow rate DF (70 L/min).

The maximum delivery flow rate in the case where the rotation speed R of the prime mover 5 is 2000 rpm is 100 L/min. Next, on the maximum flow rate characteristic graph UC, the reference current value in the case where the supply flow rate DF is 100 L/min is 2800 mA. On the standard flow rate characteristic graph SC, the supply flow rate DF of hydraulic fluid supplied from the standard control valve upon receipt of control current having a reference current value of 2800 mA is 90 L/min. With this, the information processing terminal 50 associates the specific rotation speed (2000 rpm) and the supply flow rate DF (90 L/min) with each other and converts the maximum delivery flow rate (100 L/min) into the supply flow rate DF (90 L/min).

The following describes, with reference to FIGS. 8 and 10, the conversion of the maximum delivery flow rates into the limit flow rates LF in cases where the minimum-torque prime mover 5 is combined with a hydraulic pump P corresponding to the minimum-torque primo mover 5 and where the specific rotation speed is 800 rpm, 1600 rpm, or 2000 rpm. On the lower limit delivery flow rate characteristic graph VC2 illustrated in FIG. 8, the maximum delivery flow rate in the case where the rotation speed R of the prime mover 5 is 800 rpm is 35 L/min. Next, on the maximum flow rate characteristic graph UC, the reference current value in the case where the supply flow rate DF is 35 L/min is 1850 mA. On the standard flow rate characteristic graph SC, the supply flow rate DF of hydraulic fluid supplied from the standard control valve upon receipt of control current having a reference current value of 1850 mA is 28 L/min. With this, the information processing terminal 50 associates the specific rotation speed (800 rpm) and the supply flow rate DF (28 L/min) with each other and converts the maximum delivery flow rate (35 L/min) into the supply flow rate DF (28 L/min).

The maximum delivery flow rate in the case where the rotation speed R of the prime mover 5 is 1600 rpm is 71 L/min. Next, on the maximum flow rate characteristic graph UC, the reference current value in the case where the supply flow rate DF is 71 L/min is 2250 mA. Next, on the standard flow rate characteristic graph SC, the supply flow rate DF of hydraulic fluid supplied from the standard control valve upon receipt of control current having a reference current value of 2250 mA is 60 L/min. With this, the information processing terminal 50 associates the specific rotation speed (1600 rpm) and the supply flow rate DF (60 L/min) with each other and converts the maximum delivery flow rate (71 L/min) into the supply flow rate DF (60 L/min).

The maximum delivery flow rate in the case where the rotation speed R of the prime mover 5 is 2000 rpm is 87 L/min. Next, on the maximum flow rate characteristic graph UC, the reference current value in the case where the supply flow rate DF is 87 L/min is 2600 mA. Next, on the standard flow rate characteristic graph SC, the supply flow rate DF of hydraulic fluid supplied from the standard control valve upon receipt of control current having a reference current value of 2600 mA is 76 L/min. With this, the information processing terminal 50 associates the specific rotation speed (2000 rpm) and the supply flow rate DF (76 L/min) with each other and converts the maximum delivery flow rate (87 L/min) into the supply flow rate DF (76 L/min).

Note that, in the examples illustrated in FIGS. 7 and 8, when the delivery flow rate characteristic graph VC is converted into the supply flow rate limit graph M3, maximum delivery flow rates corresponding to seven specific rotation speeds are converted into the supply flow rates DF. However, it is only necessary that at least two maximum delivery flow rates be converted into supply flow rates DF so that a function can be calculated based on the values obtained via the conversion. Specifically, in the examples illustrated in FIGS. 7 and 8, the supply flow rate limit graph M3 is a broken-line function based on the values obtained through conversion, but may be a regression line function based on the values obtained through conversion or an approximate curve passing through the values obtained through conversion, provided that the function is based at least on the values obtained through conversion. Note that, when the delivery flow rate characteristic graph VC is converted into the supply flow rate limit graph M3, converting more maximum delivery flow rates is more preferred.

In the present embodiment, the controller 11 acquires the limit flow rate(s) LF corresponding to rotation speed(s) R of the prime mover 5 based on the actual rotation speed(s) of the prime mover 5 detected by the first detector 12 and on the supply flow rate limit graph M3 and corrects the second graph M2 based on the limit flow rate(s) LF. With this, the controller 11 controls the control valve 30 using the operation signal outputted from the manual operator 42, the first graph M1, and the corrected second graph M2 and limits the maximum flow rate MF of hydraulic fluid supplied from the control valve 30 to the hydraulic actuator 26.

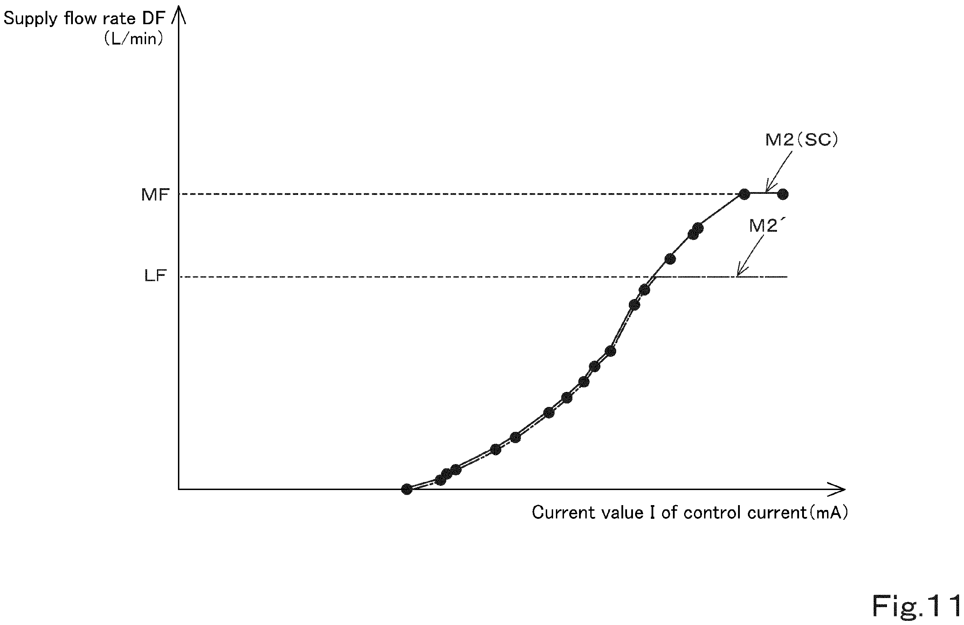

The controller 11, upon acquisition of a limit flow rate LF, corrects the corresponding maximum flow rate MF in the second graph M2 based on the limit flow rate LF. Specifically, the controller 11 limits the maximum flow rate(s) MF by correcting the portion of the second graph M2 in which the supply flow rate DF is higher than the acquired limit flow rate LF such that the corrected supply flow rate DF is equal to the limit flow rate LF. With this, as illustrated in FIG. 11, the second graph M2 is corrected based on the limit flow rate(s) LF acquired based on the actual rotation speed(s) of the prime mover 5 and the supply flow rate limit graph M3. In the example illustrated in FIG. 11, the uncorrected second graph M2 is represented by solid line, and the corrected second graph M2' is represented by dot-dash line.

Note that in an example according to the embodiment described above, the controller 11 corrects the second graph M2. However, the method of correction is not limited, provided that the controller 11 controls the maximum flow rate MF at or below the limit flow rate LF. For example, the controller 11 may be configured or programmed to, in the case where the second graph M2 is not corrected and the target flow rate TF acquired from the first graph M1 exceeds the limit flow rate LF, correct the target flow rate TF to the limit flow rate LF.

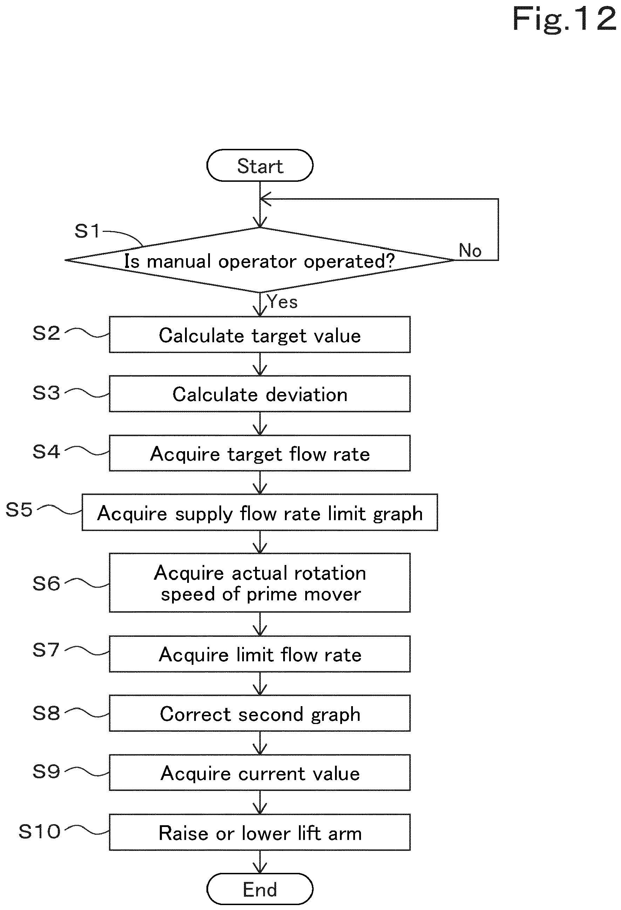

The following describes a flow in which the controller 11 limits the maximum flow rate MF. FIG. 12 illustrates the flow of steps by which the controller 11 limits the maximum flow rate MF. The series of steps illustrated in FIG. 12 are performed by CPU(s) based on software program(s) stored in the storing unit 11a of the controller 11 in advance. The controller 11 determines whether the manual operator 42 is operated (S 1). If it is determined that the manual operator 42 is operated based on the operation signal outputted from the manual operator 42 (Yes at S1), the controller 11 calculates a target value (S2). The controller 11 calculates a deviation ΔD based on the actual position and the target value (S3). The controller 11 acquires a target flow rate TF based on the deviation ΔD and the first graph M1 (S4).

The controller 11 acquires a supply flow rate limit graph M3 stored in the storing unit 11a (S5). The controller 11 acquires the actual rotation speed of the prime mover 5 detected by the first detector 12 (S6). The controller 11, upon acquisition of the actual rotation speed of the prime mover 5 (S6), refers to the supply flow rate limit graph M3, and acquires the limit flow rate LF corresponding to the acquired actual rotation speed of the prime mover 5 (S7). The controller 11 corrects the second graph M2 based on the acquired limit flow rate LF (S8).

The controller 11 acquires the current value I of control current based on the target flow rate TF and the corrected second graph M2 (S9). With this, the controller 11 outputs the acquired current value I to the control valve 30 to control the control valve 30, thus raising or lowering the lift arm 21 (S10).

That is, a method of controlling a working machine 1 includes steps (S8 to S9) involving causing the controller 11 to control the control valve 30 to limit the maximum flow rate MF of hydraulic fluid supplied from the control valve 30 to the hydraulic actuator 26 such that the flow rate of hydraulic fluid does not exceed the limit flow rate LF.

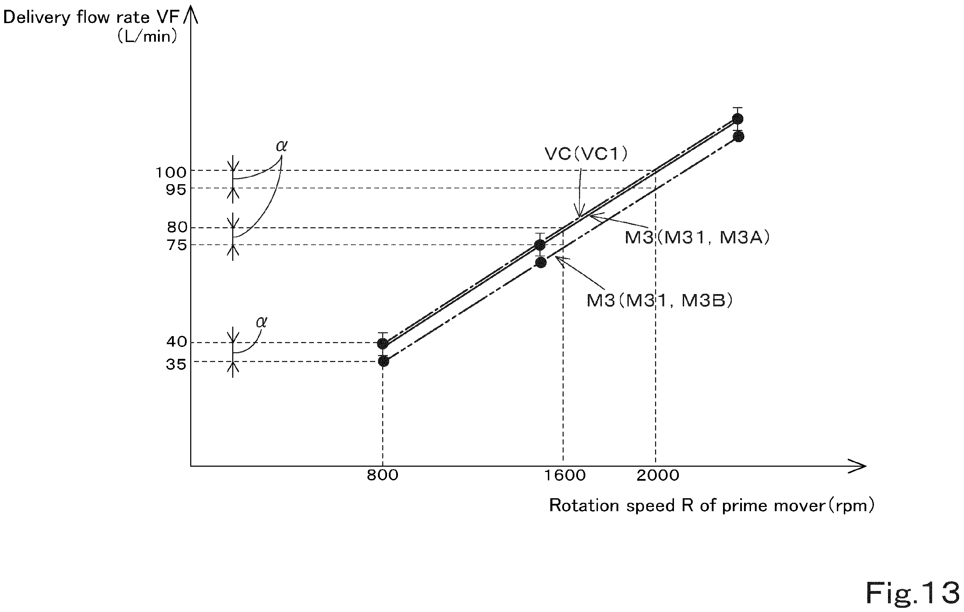

Note that in an example described in the embodiment described above, the limit flow rate LF is calculated by converting the maximum delivery flow rate in the delivery flow rate characteristic graph VC. However, each limit flow rate LF may be calculated based on the corresponding maximum delivery flow rate corresponding to the rotation speed R of the prime mover 5. Specifically, the limit flow rate LF may be equal to the corresponding maximum delivery flow rate corresponding to the rotation speed R of the prime mover 5 (first variation). The limit flow rate LF may have a value obtained by subtracting a predetermined value α from the corresponding maximum delivery flow rate corresponding to the rotation speed R of the prime mover 5 (second variation). FIG. 13 illustrates an example of the delivery flow rate characteristic graph VC and supply flow rate limit graphs M3A and M3B according to the variations.

In the chart illustrated in FIG. 13, the horizontal axis represents the rotation speed R of the prime mover 5, and the vertical axis represents the flow rate (delivery flow rate) VF of hydraulic fluid delivered by the hydraulic pump P. In the example illustrated in FIG. 13, the delivery flow rate characteristic graph VC is represented by dot-dash line, the supply flow rate limit graph M3A according to the first variation is represented by solid line, and the supply flow rate limit graph M3B according to the second variation is represented by dot-dot-dash line. FIG. 13 illustrates the delivery flow rate characteristic graph (maximum delivery flow rate characteristic graph) VC1 for the maximum-torque prime mover 5 and the hydraulic pump P corresponding to the maximum-torque prime mover 5.

As illustrated in FIG. 13, the supply flow rate limit graph M3A according to the first variation matches the delivery flow rate characteristic graph VC, and the limit flow rate LF at each rotation speed R is equal to the corresponding maximum delivery flow rate in the delivery flow rate characteristic graph VC. On the contrary, in the supply flow rate limit graph M3B according to the second variation, the limit flow rate LF at each rotation speed R is less than the corresponding maximum delivery flow rate in the delivery flow rate characteristic graph VC by the predetermined value α. Note that, in the second variation illustrated in FIG. 13, the predetermined value α is constant at all rotation speeds R, but may increase as the rotation speed R increases.

Example embodiments of the present invention provide working machines 1 and methods of controlling working machines 1 described in the following items.

(Item 1) A working machine 1 includes a prime mover 5 to produce power, a variable displacement hydraulic pump P to be actuated by power produced by the prime mover 5 to deliver hydraulic fluid, a hydraulic actuator 26 to be actuated by hydraulic fluid delivered by the hydraulic pump P, a control valve 30 to adjust hydraulic fluid to actuate the hydraulic actuator 26, and a controller 11 configured or programmed to control the control valve 30, wherein the controller 11 is configured or programmed to, based on an actual rotation speed of the prime mover 5, control the control valve 30 to limit a maximum flow rate MF of hydraulic fluid supplied from the control valve 30 to the hydraulic actuator 26 such that the maximum flow rate MF does not exceed a limit flow rate LF, and the limit flow rate LF corresponding to a rotation speed R of the prime mover 5 is equal to or less than a maximum delivery flow rate of the hydraulic pump P corresponding to the rotation speed R.

With the working machine 1 according to item 1, the flow rate of hydraulic fluid that can be supplied by the control valve 30 is limited at or below the delivery flow rate VF of hydraulic fluid that can be delivered by the hydraulic pump P. Therefore, the state in which the hydraulic actuator 26 is controlled substantially based on the rotation speed R of the prime mover 5 does not occur, and it is possible to appropriately control the hydraulic actuator 26 using the control valve 30. Furthermore, since the controller 11 limits the maximum flow rate MF based on the actual rotation speed of the prime mover 5, it is unlikely that the controller 11 would limit the flow rate of hydraulic fluid supplied from the control valve 30 to the hydraulic actuator 26 even in the case where the hydraulic pump P sufficiently delivers hydraulic fluid.

(Item 2) The working machine 1 according to item 1, wherein each of a plurality of the limit flow rates LF is less than a corresponding maximum delivery flow rate that corresponds to a corresponding rotation speed R of the prime mover 5.

With the working machine 1 according to item 2, the controller 11 is capable of more appropriately controlling the hydraulic actuator 26 using the control valve 30.

(Item 3) The working machine (1) according to item 2, wherein each of the plurality of limit flow rates LF is calculated by converting the corresponding maximum delivery flow rate based on a standard flow rate characteristic graph SC and a maximum flow rate characteristic graph UC, the standard flow rate characteristic graph SC representing a relationship between current values I of control current outputted to a standard control valve and flow rates of hydraulic fluid from the standard control valve, the standard control valve being a predetermined control valve 30, the maximum flow rate characteristic graph UC being a flow rate characteristic graph for a maximum-flow-rate control valve 30 that is higher in a flow rate of hydraulic fluid than the standard flow rate characteristic graph SC.

With the working machine 1 according to item 3, the maximum delivery flow rate is converted using the standard flow rate characteristic graph SC and the maximum flow rate characteristic graph UC, making it possible to appropriately convert the maximum delivery flow rate to the limit flow rate LF.

(Item 4) The working machine 1 according to item 3, wherein each of the plurality of limit flow rates LF is calculated by converting the corresponding maximum delivery flow rate into a flow rate of hydraulic fluid from the standard control valve by obtaining the corresponding maximum delivery flow rate corresponding to the corresponding rotation speed R of the prime mover 5 in a delivery flow rate characteristic graph VC, the delivery flow rate characteristic graph VC representing a relationship between a plurality of the rotation speeds R of the prime mover 5 and a corresponding plurality of the maximum delivery flow rates, and converting the obtained maximum delivery flow rate into the flow rate of hydraulic fluid from the standard control valve by (i) obtaining a result corresponding to the obtained maximum delivery flow rate based on the maximum flow rate characteristic graph UC and (ii) obtaining the flow rate of hydraulic fluid from the standard control valve corresponding to the obtained result based on the standard flow rate characteristic graph SC.

With the working machine 1 according to item 4, since the standard flow rate characteristic graph SC is lower in the flow rate of hydraulic fluid than the maximum flow rate characteristic graph UC, it is possible to appropriately convert the maximum delivery flow rate to the limit flow rate LF.

(Item 5) The working machine 1 according to item 4, wherein each of the plurality of limit flow rates LF is calculated by converting the corresponding maximum delivery flow rate into the flow rate of hydraulic fluid from the standard control valve by obtaining the corresponding maximum delivery flow rate corresponding to the corresponding rotation speed R of the prime mover 5 in the delivery flow rate characteristic graph VC, and converting the obtained maximum delivery flow rate into the flow rate of hydraulic fluid from the standard control valve by (i) obtaining a current value I corresponding to the obtained maximum delivery flow rate based on the maximum flow rate characteristic graph UC and (ii) obtaining, based on the standard flow rate characteristic graph SC and the obtained current value I, the flow rate of hydraulic fluid supplied from the standard control valve upon receipt of the control current having the obtained current value I.

With the working machine 1 according to item 5, since the standard flow rate characteristic graph SC is lower in the flow rate of hydraulic fluid (supply flow rate DF) than the maximum flow rate characteristic graph UC when the current value I is the same, it is possible to more reliably limit the maximum flow rate MF of hydraulic fluid supplied to the hydraulic actuator 26 based on the actual rotation speed of the prime mover 5.

(Item 6) The working machine 1 according to item 5, further including a load sensing system 35 to control the hydraulic pump P such that a differential pressure obtained by subtracting a load pressure on the hydraulic actuator 26 from a delivery pressure of the hydraulic pump P is constant.

With the working machine 1 according to item 6, the flow rate of hydraulic fluid that can be supplied by the control valve 30 is limited to a flow rate less than the delivery flow rate VF of hydraulic fluid that can be delivered by the hydraulic pump P, and the control performed by the load sensing system 35 makes it possible to eliminate or reduce the likelihood that the flow rate of hydraulic fluid supplied to the hydraulic actuator 26 will suddenly change and the operation of the hydraulic actuator 26 will undergo an impact and possible to sufficiently actuate the drive device 8.

(Item 7) The working machine 1 according to item 6, further including a drive device 8 including the hydraulic actuator 26, wherein the drive device 8 includes a driven member 21 to be driven by the hydraulic actuator 26, the controller 11 is configured or programmed to calculate a deviation ΔD of an actual position of the driven member 21 from a target value and control the control valve 30 such that a flow rate of hydraulic fluid from the control valve 30 is equal to or less than the maximum flow rate MF based on a relationship between the deviation ΔD and a target flow rate TF of hydraulic fluid to actuate the hydraulic actuator 26 and on a relationship between the current value I of the control current outputted to the predetermined control valve 30 and a flow rate of hydraulic fluid from the predetermined control valve 30.

With the working machine 1 according to item 7, by limiting the current value I of the control current, it is possible to limit the flow rate of hydraulic fluid supplied from the control valve 30 to the hydraulic actuator 26 at or below the maximum delivery flow rate.

(Item 8) The working machine 1 according to item 7, wherein the relationship between the current value I of the control current outputted to the predetermined control valve 30 and the flow rate of hydraulic fluid from the predetermined control valve 30 is defined based on the standard flow rate characteristic graph SC.

With the working machine 1 according to item 8, it is possible to reliably eliminate or reduce the likelihood that the load pressure on the hydraulic actuator 26 will exceed the delivery pressure of the hydraulic pump P even in the case where the control valve 30 is a maximum-flow-rate control valve.

(Item 9) The working machine 1 according to item 1, wherein the limit flow rate LF is calculated based on the maximum delivery flow rate corresponding to the rotation speed R of the prime mover 5.

With the working machine 1 according to item 9, it is possible to more reliably limit the flow rate of hydraulic fluid supplied from the control valve 30 to the hydraulic actuator 26 at or below the maximum delivery flow rate.

(Item 10) The working machine 1 according to item 8 or 9, wherein the limit flow rate LF is calculated using a delivery flow rate characteristic graph VC representing a relationship between a plurality of the rotation speeds R of the prime mover 5 and a corresponding plurality of the maximum delivery flow rates, and the delivery flow rate characteristic graph VC is selected from one or more delivery flow rate characteristic graphs VC based on a combination of the prime mover 5 and the hydraulic pump P.

With the working machine 1 according to item 10, the controller 11 is capable of controlling the control valve 30 using an appropriate limit flow rate LF based on the combination of the prime mover 5 and the hydraulic pump P. This makes it possible to more reliably eliminate or reduce the likelihood that the maximum load pressure on the hydraulic actuator 26 will exceed the delivery pressure of the hydraulic pump P.

(Item 11) The working machine 1 according to any one of items 1 to 10, further including a drive device 8 including the hydraulic actuator 26, wherein the drive device 8 is a lifting device 8 to raise and lower a working device 3, the lifting device 8 including a driven member 21 to be driven by driving the hydraulic actuator 26, the hydraulic actuator 26 is a lift cylinder, and the driven member 21 is a lift arm to be driven by driving the lift cylinder 26.

With the working machine 1 according to item 11, even in the case of a lifting device 8 which requires a relatively high flow rate of hydraulic fluid to drive the driven member 21, the control performed by the load sensing system 35 makes it possible to eliminate or reduce the likelihood that the flow rate of hydraulic fluid supplied to the hydraulic actuator 26 will suddenly change and that the operation of the hydraulic actuator 26 undergo an impact.

(Item 12) A method of controlling a working machine 1 including a prime mover 5 to produce power, a variable displacement hydraulic pump P to be actuated by power produced by the prime mover 5 to deliver hydraulic fluid, a hydraulic actuator 26 to be actuated by hydraulic fluid delivered by the hydraulic pump P, a control valve 30 to adjust hydraulic fluid to actuate the hydraulic actuator 26, and a controller 11 configured or programmed to control the control valve 30, the method including causing the controller 11 to, based on an actual rotation speed of the prime mover 5, control the control valve 30 to limit a maximum flow rate MF of hydraulic fluid supplied from the control valve 30 to the hydraulic actuator 26 such that the maximum flow rate MF does not exceed a limit flow rate LF, wherein the limit flow rate LF corresponding to a rotation speed R of the prime mover 5 is equal to or less than a maximum delivery flow rate of the hydraulic pump P corresponding to the rotation speed R.

With the method of controlling a working machine 1 according to item 12, the flow rate of hydraulic fluid that can be supplied by the control valve 30 is limited at or below the delivery flow rate VF of hydraulic fluid that can be delivered by the hydraulic pump P. Therefore, the state in which the hydraulic actuator 26 is controlled based on the rotation speed R of the prime mover 5 substantially does not occur, and it is possible to appropriately control the hydraulic actuator 26 using the control valve 30. Furthermore, since the controller 11 limits the maximum flow rate MF based on the actual rotation speed of the prime mover 5, the controller 11 does not limit the flow rate of hydraulic fluid supplied from the control valve 30 to the hydraulic actuator 26 in the case where the hydraulic pump P sufficiently delivers hydraulic fluid.

While preferred embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. A working machine (1) comprising:
a prime mover (5) to produce power;
a variable displacement hydraulic pump (P) to be actuated by power produced by the prime mover (5) to deliver hydraulic fluid;
a hydraulic actuator (26) to be actuated by hydraulic fluid delivered by the hydraulic pump (P);
a control valve (30) to adjust hydraulic fluid to actuate the hydraulic actuator (26); and
a controller (11) configured or programmed to control the control valve (30); wherein
the controller (11) is configured or programmed to, based on an actual rotation speed of the prime mover (5), control the control valve (30) to limit a maximum flow rate (MF) of hydraulic fluid supplied from the control valve (30) to the hydraulic actuator (26) such that the maximum flow rate (MF) does not exceed a limit flow rate (LF); and
the limit flow rate (LF) corresponding to a rotation speed (R) of the prime mover (5) is equal to or less than a maximum delivery flow rate of the hydraulic pump (P) corresponding to the rotation speed (R).

2. The working machine (1) according to claim 1, wherein each of a plurality of the limit flow rates (LF) is less than a corresponding maximum delivery flow rate that corresponds to a corresponding rotation speed (R) of the prime mover (5).

3. The working machine (1) according to claim 2, wherein each of the plurality of limit flow rates (LF) is calculated by converting the corresponding maximum delivery flow rate based on a standard flow rate characteristic graph (SC) and a maximum flow rate characteristic graph (UC), the standard flow rate characteristic graph (SC) representing a relationship between current values (I) of control current outputted to a standard control valve and flow rates of hydraulic fluid from the standard control valve, the standard control valve being a predetermined control valve (30), the maximum flow rate characteristic graph (UC) being a flow rate characteristic graph for a maximum-flow-rate control valve (30) that is higher in a flow rate of hydraulic fluid than the standard flow rate characteristic graph (SC).

4. The working machine (1) according to claim 3, wherein each of the plurality of limit flow rates (LF) is calculated by converting the corresponding maximum delivery flow rate into a flow rate of hydraulic fluid from the standard control valve by:
obtaining the corresponding maximum delivery flow rate corresponding to the corresponding rotation speed (R) of the prime mover (5) in a delivery flow rate characteristic graph (VC), the delivery flow rate characteristic graph (VC) representing a relationship between a plurality of the rotation speeds (R) of the prime mover (5) and a corresponding plurality of the maximum delivery flow rates; and
converting the obtained maximum delivery flow rate into the flow rate of hydraulic fluid from the standard control valve by (i) obtaining a result corresponding to the obtained maximum delivery flow rate based on the maximum flow rate characteristic graph (UC) and (ii) obtaining the flow rate of hydraulic fluid from the standard control valve corresponding to the obtained result based on the standard flow rate characteristic graph (SC).

5. The working machine (1) according to claim 4, wherein each of the plurality of limit flow rates (LF) is calculated by converting the corresponding maximum delivery flow rate into the flow rate of hydraulic fluid from the standard control valve by:
obtaining the corresponding maximum delivery flow rate corresponding to the corresponding rotation speed (R) of the prime mover (5) in the delivery flow rate characteristic graph (VC); and
converting the obtained maximum delivery flow rate into the flow rate of hydraulic fluid from the standard control valve by (i) obtaining a current value (I) corresponding to the obtained maximum delivery flow rate based on the maximum flow rate characteristic graph (UC) and (ii) obtaining, based on the standard flow rate characteristic graph (SC) and the obtained current value (I), the flow rate of hydraulic fluid supplied from the standard control valve upon receipt of the control current having the obtained current value (I).

6. The working machine (1) according to claim 5, further comprising:
a load sensing system (35) to control the hydraulic pump (P) such that a differential pressure obtained by subtracting a load pressure on the hydraulic actuator (26) from a delivery pressure of the hydraulic pump (P) is constant.

7. The working machine (1) according to claim 6, further comprising:
a drive device (8) including the hydraulic actuator (26); wherein
the drive device (8) includes a driven member (21) to be driven by the hydraulic actuator (26);
the controller (11) is configured or programmed to:
calculate a deviation (ΔD) of an actual position of the driven member (21) from a target value; and
control the control valve (30) such that a flow rate of hydraulic fluid from the control valve (30) is equal to or less than the maximum flow rate (MF) based on a relationship between the deviation (ΔD) and a target flow rate (TF) of hydraulic fluid to actuate the hydraulic actuator (26) and on a relationship between the current value (I) of the control current outputted to the predetermined control valve (30) and a flow rate of hydraulic fluid from the predetermined control valve (30).

8. The working machine (1) according to claim 7, wherein the relationship between the current value (I) of the control current outputted to the predetermined control valve (30) and the flow rate of hydraulic fluid from the predetermined control valve (30) is defined based on the standard flow rate characteristic graph (SC).

9. The working machine (1) according to claim 1, wherein the limit flow rate (LF) is calculated based on the maximum delivery flow rate corresponding to the rotation speed (R) of the prime mover (5).

10. The working machine (1) according to claim 8 or 9, wherein
the limit flow rate (LF) is calculated using a delivery flow rate characteristic graph (VC) representing a relationship between a plurality of the rotation speeds (R) of the prime mover (5) and a corresponding plurality of the maximum delivery flow rates; and
the delivery flow rate characteristic graph (VC) is selected from one or more delivery flow rate characteristic graphs (VC) based on a combination of the prime mover (5) and the hydraulic pump (P).

11. The working machine (1) according to any one of claims 1 to 10, further comprising:
a drive device (8) including the hydraulic actuator (26); wherein
the drive device (8) is a lifting device (8) to raise and lower a working device (3), the lifting device (8) including a driven member (21) to be driven by driving the hydraulic actuator (26);
the hydraulic actuator (26) is a lift cylinder; and
the driven member (21) is a lift arm to be driven by driving the lift cylinder (26).

12. A method of controlling a working machine (1) including a prime mover (5) to produce power, a variable displacement hydraulic pump (P) to be actuated by power produced by the prime mover (5) to deliver hydraulic fluid, a hydraulic actuator (26) to be actuated by hydraulic fluid delivered by the hydraulic pump (P), a control valve (30) to adjust hydraulic fluid to actuate the hydraulic actuator (26), and a controller (11) configured or programmed to control the control valve (30), the method comprising:
causing the controller (11) to, based on an actual rotation speed of the prime mover (5), control the control valve (30) to limit a maximum flow rate (MF) of hydraulic fluid supplied from the control valve (30) to the hydraulic actuator (26) such that the maximum flow rate (MF) does not exceed a limit flow rate (LF); wherein
the limit flow rate (LF) corresponding to a rotation speed (R) of the prime mover (5) is equal to or less than a maximum delivery flow rate of the hydraulic pump (P) corresponding to the rotation speed (R).
